(19)

Europäisches Patentamt

European Patent Office

Office européen des brevets

(11) **EP 2 323 023 A2**

(12) **EUROPEAN PATENT APPLICATION**

(43) Date of publication:
18.05.2011 Bulletin 2011/20

(51) Int Cl.:
*G06F 3/044* (2006.01)     *G06F 3/048* (2006.01)

(21) Application number: 10190132.0

(22) Date of filing: 05.11.2010

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 12.11.2009 KR 20090109236

(71) Applicant: Samsung Electronics Co., Ltd.
Suwon-si, Gyeonggi-do 442-742 (KR)

(72) Inventors:
• Lee, Hyun-Jeong
Seoul (KR)

• Park, Joon-An
Seoul (KR)
• Chang, Wook
Seoul (KR)
• Han, Seung-Ju
Seoul (KR)

(74) Representative: Land, Addick Adrianus Gosling et al
Arnold & Siedsma
Sweelinckplein 1
2517 GK Den Haag (NL)

(54) **Methos and apparatus with proximity touch detection**

(57)     An apparatus detecting a proximity touch efficiently identifies a gesture which a user uses in the user's daily life and performs an operation corresponding to the gesture. The apparatus detects a proximity touch of an object and generates a detection signal. The apparatus generates detection information including three-dimensional positional information about the object using the detection signal and generates tracking information by tracking the detection information. The apparatus identifies a gesture corresponding to the tracking information by retrieving the gesture from a storage unit and executes an operation corresponding to the gesture.

FIG.2

POINTER HOVERING SPACE (210)

POINTER FREEZE SPACE (220)

EXECUTION SPACE (230)

EP 2 323 023 A2

**Description**

This application claims the benefit under 35 U.S.C. § 119(a) of Korean Patent Application No. 10-2009-0109236, filed on November 12, 2009, the entire disclosure of which is incorporated herein by reference for all purposes.

One or more embodiments relate to a gesture detection technique, and more particularly, to a method and apparatus with proximity touch detection, capable of performing an operation corresponding to a proximity touch of a user without physical contact.

A touch screen is a display that can detect the presence and location of a touch by a finger or a pen within the display area. The touch screen is widely used in compact mobile devices or large-sized and/or fixed devices, such as mobile phones, game consoles, automated teller machines, monitors, home appliances, and digital information displays, as only examples.

Research has been recently under way on detection of pressure or a touch by both a finger and a pen and on a user interface using a proximity sensor detecting the presence of nearby objects close to a touch panel.

One or more embodiments relate to a method and apparatus with proximity touch detection, capable of effectively identifying a user's gestures in daily life and performing operations corresponding to the gestures.

According to an aspect of one or more embodiments, there may be provided an apparatus detecting a proximity touch, the apparatus including a sensing unit to detect a proximity touch of an object and generate a proximity detection signal based on the detected proximity touch, a control unit to generate detection information including three-dimensional (3D) positional information about the object using the proximity detection signal, generate tracking information by tracking the detection information, retrieve a gesture corresponding to the tracking information from a storage unit to identify the gesture, and to control execution of an operation corresponding to the gesture, and the storage unit to store the gesture information corresponding to the tracking information.

According to an aspect of one or more embodiments, there may be provided a method of detecting a proximity touch, the method including detecting a proximity touch of an object and generating a proximity detection signal based on the detected proximity touch, generating detection information including three-dimensional (3D) positional information about the object using the proximity detection signal, generating tracking information by tracking the detection information, identifying a gesture corresponding to the tracking information by comparing the tracking information to stored gesture information, and executing an operation corresponding to the gesture.

According to an aspect of one or more embodiments, there may be provided a sensing unit to detect a proximity touch, the sensing unit including a plurality of selectively drivable sensors to be selectively driven to detect a proximity touch of an object and a contact touch of the object, and a controller to control one or more drivers to selectively drive the sensors with proximity drive signals configured for a proximity touch mode to detect the proximity touch and contact drive signals configured for a contact touch mode for detecting the contact touch, the controller controlling the proximity drive signals to drive different configurations of the sensors to detect the proximity touch in the proximity touch mode from configurations of the sensors driven by the contact drive signals to detect the contact touch in the contact touch mode.

According to an aspect of one or more embodiments, there may be provided an apparatus to detect a proximity touch, the apparatus including this sensing unit, with the controller of the sensing unit generating a proximity detection signal based on the detected proximity touch, and a control unit to generate detection information including three-dimensional (3D) positional information about the object using the proximity detection signal, generate tracking information by tracking the detection information, retrieve a gesture corresponding to the tracking information from a storage unit to identify the gesture, and to control execution of an operation corresponding to the gesture.

According to an aspect of one or more embodiments, there may be provided a sensing method for detecting a proximity touch with a plurality of selectively drivable sensors to be selectively driven to detect the proximity touch of an object and a contact touch of the object, the method including selectively driving the sensors with proximity drive signals configured for a proximity touch mode to detect the proximity touch and contact drive signals configured for a contact touch mode for detecting the contact touch, the selective driving of the sensors including controlling the proximity drive signals to drive different configurations of the sensors to detect the proximity touch in the proximity touch mode than configurations of the sensors driven by the contact drive signals to detect the contact touch in the contact touch mode.

This method for detecting the proximity touch may further include generating a proximity detection signal based on the detected proximity touch, generating detection information including three-dimensional (3D) positional information about the object using the proximity detection signal, generating tracking information by tracking the detection information, identifying a gesture corresponding to the tracking information by comparing the tracking information to stored gesture information, and executing an operation corresponding to the gesture.

Additional aspects of the one or more embodiments will be set forth in part in the description which follows and, in part, will be apparent from the description, or may be learned by practice of the embodiments.

These and/or other aspects will become apparent and more readily appreciated from the following description of the one or more embodiments, taken in conjunction with the accompanying drawings of which:

FIG. 1 is a block diagram of an apparatus detecting a proximity touch, according to one or more embodiments;

FIG. 2 illustrates spaces defined by respective perpendicular distances from a sensing unit, according to one or more embodiments;

FIG. 3 illustrates a method of executing a menu in a pointer freeze space, according to one or more embodiments;

FIG. 4 illustrates a method of executing a menu in a pointer freeze space, according to one or more embodiments;

FIGS. 5A to 5C illustrate basic gesture information that may be used in identifying an access direction of a proximity touch, according to one or more embodiments;

FIG. 6 illustrates natural gesture information used in identifying a user's gestures used in the user's daily life, according to one or more embodiments;.

FIGS. 7A and 7B illustrate an operation of an apparatus detecting a proximity touch, which identifies a gesture and performs volume adjustment, according to one or more embodiments;

FIGS. 8A and 8B illustrate an apparatus detecting a proximity touch which changes tracks of audio according to a determined direction of a proximity touch, according to one or more embodiments;

FIG. 9 illustrates an operation of a proximity touch in a map search application, according to one or more embodiments;

FIG. 10 illustrates a proximity touch in a 3D modeling application, according to one or more embodiments;

FIG. 11 is a view of a sensing unit in an apparatus detecting a proximity touch, such as the apparatus detecting a proximity touch in FIG. 1, according to one or more embodiments;

FIG. 12 illustrates operation of a sensing unit in a contact touch mode, according to one or more embodiments;

FIG. 13 is a circuit diagram of a sensing unit upon detection of a contact in FIG. 12, according to one or more embodiments;

FIGS. 14A to 14C illustrate operation of a sensing unit for measuring an X-axis position in a proximity touch mode, according to one or more embodiments;

FIG. 15 illustrates a circuit diagram of a sensing unit upon detection of a proximity touch, according to one or more embodiments;

FIGS. 16A to 16C illustrate operation of a sensing unit for measuring a Y-axis position in a proximity touch mode, according to one or more embodiments;

FIG. 17 is a flow chart of a method of detecting a proximity touch, according to one or more embodiments.

Reference will now be made in detail to one or more embodiments, illustrated in the accompanying drawings, wherein like reference numerals refer to like elements throughout. In this regard, embodiments of the present invention may be embodied in many different forms and should not be construed as being limited to embodiments set forth herein. Accordingly, embodiments are merely described below, by referring to the figures, to explain aspects of the present invention.

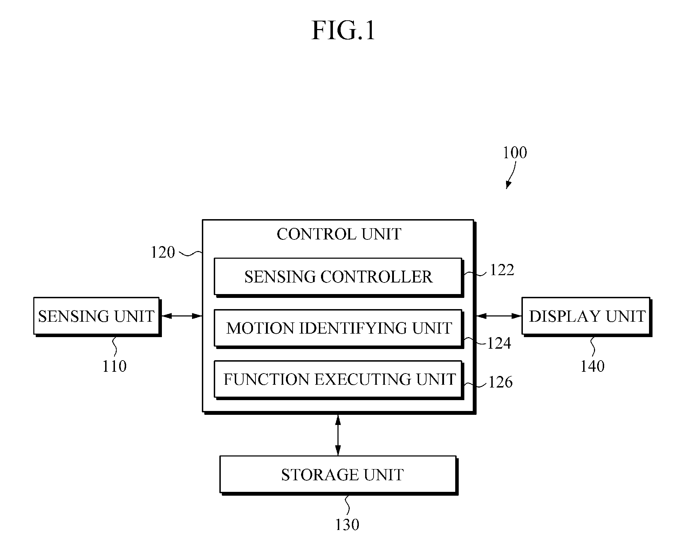

FIG. 1 is a block diagram of an apparatus 100 for detecting a proximity touch, according to one or more embodiments.

The apparatus 100 may include a sensing unit 110, a control unit 120, a storage unit 130 and a display unit 140. The apparatus 100 may be a fixed or mobile device, such as a personal computer, a fixed display, a portable phone, a personal digital assistant (PDA), a portable multimedia player (PMP), an MP3 player, a digital broadcast receiver, and a navigation device, noting that additional and/or alternative embodiments are equally available.

The sensing unit 110 detects the presence of a nearby object and generates a detection signal. Examples of the object may include a part of a human body, a stylus, etc. The control unit 120 may control the sensing unit 110, the storage unit 130, and the display unit 140, for example, and the storage unit 130 may store operating systems, applications, data, and information necessary for identifying a gesture corresponding to a proximity touch and a contact touch, for example, which may be desired for operation of the apparatus 100 based on the detected touch. The display unit 140 displays display information provided by the control unit 120. The display unit 140 may display operation processes and/or results of the apparatus 100 for identified gestures.

The sensing unit 110 may include one more of an ultrasonic sensor, a capacitive touch sensor, or an image sensor, for example. The sensing unit 110 may be operated in a contact touch mode for detecting contact of an object and operated in a proximity touch mode for detecting a proximity touch of an object without physical contact. Proximity touch detection may be performed, for example, using ultrasonic sensors mounted on a plurality of locations of a screen edge, infrared sensors, multi-point capacitive touch sensors, image sensors taking pictures over a screen, capacitive sensors, etc, noting that additional and/or alternative embodiments are equally available.

Infrared sensing is a technology for detecting position by radiating infrared light using an infrared LED and measuring the amount or focus position of infrared light reflected by a target. Since the amount of reflected infrared light is inversely proportional to the square of distance, the distance between the sensor and the target may be determined to be short if the amount of reflected infrared light is large and the distance may be determined to be long if the amount is small. Capacitive sensing is a technology for detecting proximity, position, etc., based on capacitive coupling effects. More specifically, for example, voltage which is sequentially applied to sensors alternating in horizontal and vertical lines induces electrical charges on the sensors, thereby generating electrical current. If a finger touches an intersection between the lines, the electrical charges are reduced and the current is thus reduced, thereby identifying the touch point.

In one or more embodiments, the sensing unit 110 may be configured to perform the proximity touch mode and the contact touch mode in a time division manner using the structure of a capacitive touch sensor. Here, in an embodiment, if the sensing unit 110 detects a proximity touch in the proximity touch mode, the control unit 120 may control the sensing unit to maintain the proximity touch mode until a detection signal corresponding to the proximity touch is no longer input. The sensing unit 110 will be described in greater detail below.

The control unit 120 may include a sensing controller 122, a motion identifying unit 124, and a function executing unit 126, for example.

The sensing controller 122 may control operation of the sensing unit 110 and transmit a detection signal from the sensing unit 110 to the motion identifying unit 124.

The motion identifying unit 124 may accumulate detection signals processed by the sensing unit 110 for a predetermined period, for example, to generate tracking information and retrieve a gesture corresponding to the tracking information from the storage unit 130 to identify the gesture, e.g., by comparing the tracking information to information of gestures stored in the storage unit 130. The tracking information may be any type or kind of information which is generated by tracking the detection signal generated by the sensing unit 110. For example, the tracking information may be two-dimensional (2D) or three-dimensional (3D) image information which is generated using a detection signal of an object that is close to the sensing unit 110. Further, in an embodiment, the tracking information may include information indicating a change in capacitance of at least one detection position, information indicating a change in central detection position with respect to a plurality of detection positions, information indicating an access direction and/or a change in direction of a proximity touch, and information indicating a change in area of a proximity touch, for example.

The storage unit 130 may store tracking information corresponding to predetermined gestures. The tracking information may include basic gesture information on access directions of a proximity touch, and natural gesture information on usual gestures of a user, for example. The motion identifying unit 124 may use the information stored in the storage unit 130 to identify a gesture of a nearby target. The function executing unit 126 may accordingly execute a particular operation(s) corresponding to the gesture.

The motion identifying unit 124 may identify a gesture using the detection signal received from the sensing unit 110. In one or more embodiments, the motion identifying unit 124 may process the detection signal to generate detection information including at least one of the number of proximity points detected for a predetermined detection period, 3D positional information of each proximity point, Z-axis level information of an object, area information of a nearby object, and capacitance information of a nearby object, for example.

The 3D positional information may indicate a position (x, y) on a plane of the sensing unit 110 and a vertical distance (z) from the sensing unit 110, when a Cartesian coordinate system is used. For example, if the sensing unit 110 is a touch panel, a position (x, y) may indicate a position on the touch panel and a vertical distance (z) may indicate a vertical distance from the touch panel. The vertical distance (z) may be referred to as depth information, and capacitance information about a nearby object on a screen may be referred to as strength information. The Z-axis level information may be defined as 1, 2, through k levels depending on the vertical distance from the sensing unit 110. The Z-axis level information may be used to discriminate between different desired operations to be implemented according to different z-axis defined spaces depending on the vertical distances. Here, though the Cartesian coordinate system is described, embodiments should not be limited to the same, and similarly such defined zones or spaces at distances away from the screen, for example, may be based upon alternate zone or space extents in addition or alternate to the vertical distance to the example screen.

The motion identifying unit 124 may identify if a proximity touch is a one-finger gesture, a two-finger gesture, a one-point gesture, a two-point gesture, a multi-finger gesture, a palm gesture, etc., for example. In an embodiment, the motion identifying unit 124 may generate track information by tracking detection information for a predetermined period. As such, the motion identifying unit 124 may recognize direction, area, position, change in vertical distance (z), change in capacitance, etc., of a detected object.

The motion identifying unit 124 may extract a meaningful motion portion from an entire motion of an object using the above-mentioned methods. For this purpose, the motion identifying unit 124 may identify a motion based on the gesture information corresponding to predefined tracking information. The motion identifying unit 124 may identify a gesture of a proximity touch by retrieving gesture information corresponding to the tracking information from the storage unit 130.

The function executing unit 126 may include at least one processing device, such as a processor, which may execute a variety of applications. Examples of applications may include a multimedia playback application, a map search application, a 3D modeling application, etc. For example, for a mobile phone including the apparatus 100 for detecting a proximity touch, e.g., mounted with a receiver/speaker of the mobile phone, the apparatus 100 may be configured to be operated in a call receiving mode and control volume to be gradually reduced in the receiver as a user puts the mobile phone to the user's ear. Thus, the gesture detection may be implemented for a specific application that is currently active, for example, and corresponding operations based upon the gesture detection may be different based upon the type of application, e.g., the multimedia playback application, the map search application, the 3D modeling application, etc.

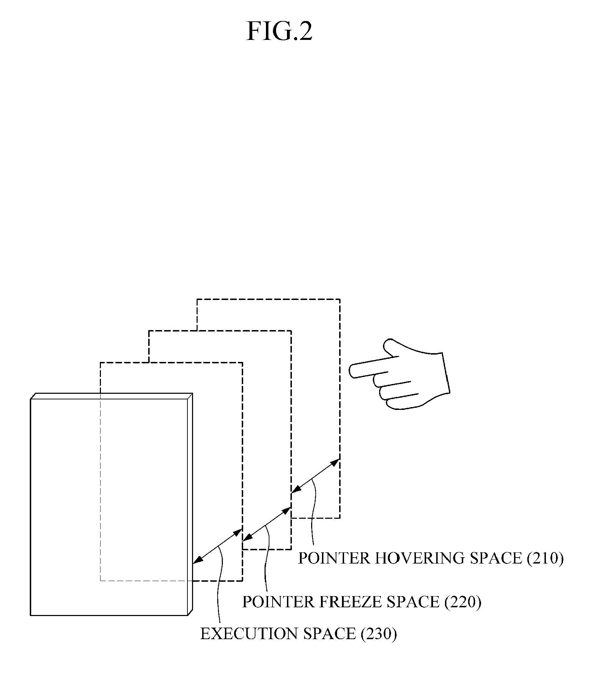

FIG. 2 illustrates spaces defined by respective perpendicular distances from a sensing unit, according to one or more embodiments.

Corresponding operations that may be implemented based upon spaces, e.g., based on Z-axis level information, will be described with reference to FIG. 2.

Since a proximity touch corresponds to motion of an object in a 3D space, accurate input may be a concern when it is used as user input information. In one embodiment, a space between the sensing unit 110 and a predetermined Z-axis distance is horizontally divided into a pointer hovering space 210, a pointer freeze space 220, and an execution space 230 in order of distance from the sensing unit 110. When a proximity touch is applied to a pointer displayed on a screen, an execution operation associated with the pointer may vary according to the divided space.

A proximity touch, such as a motion of a finger in the pointer hovering space 210, is reflected in motion of a pointer on the screen. In the case of the pointer freeze space 220, when a finger is moved from the pointer hovering space 210 to the pointer freeze space 220, a position of a pointer at that moment may be fixed on the screen. Thus, once the pointer is fixed on the pointer freeze space 220, the pointer may remain fixed on the screen even though a finger is moved within the pointer hovering space 210.

In this case, if a finger is detected as being in the execution space 230, an operation corresponding to the pointer or a predefined operation may be executed. Since the sensing unit 210 may be installed on the front face, side face, or rear face of the apparatus 100, the z-level pointer may equally be operated with respect to the front, side, and/or rear face of the apparatus 100.

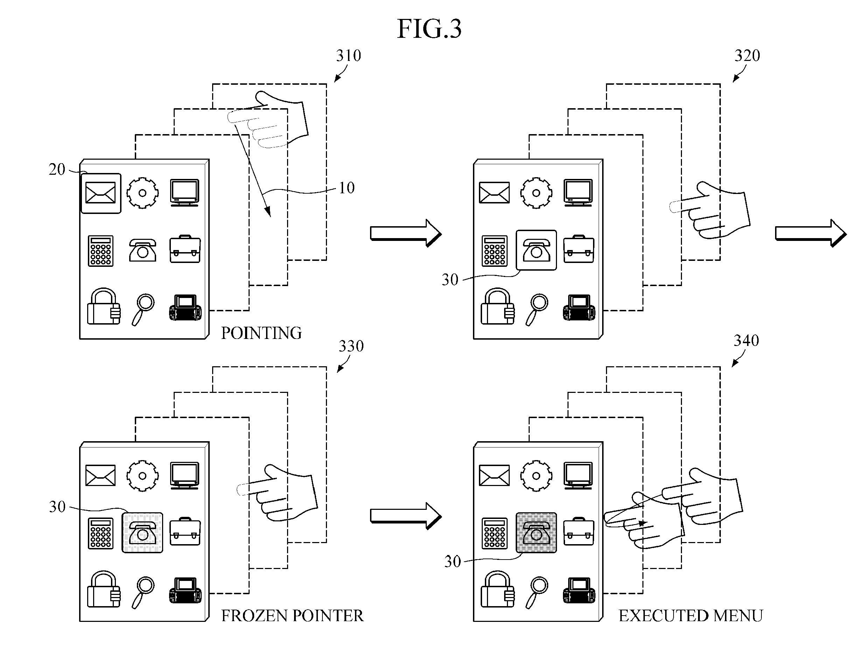

FIG. 3 illustrates a method of executing a menu by a proximity touch, according to one or more embodiments.

More specifically, FIG. 3 illustrates a method of executing a pointer by a proximity touch on a menu screen including menu items.

As shown in illustration 310 and illustration 320, when a finger is moved in a direction of an arrow 10 within the pointer hovering space 210, a displayed pointer is moved from a menu item 20 to a menu item 30. At this time, if the finger is moved from the pointer hovering space 210 to the pointer freeze space 220, the display of the pointer may be fixed as shown in illustration 330. In this case, in order for a user to be able to recognize that the finger has entered into the pointer freeze space 220, the apparatus 100 cause a color of the pointer or the menu item 30 pointed at by the pointer to be changed, for example, or to differently display or enlarge the space pointed by the pointer. Further, if the finger is moved to the execution space 230 with the pointer fixed, the menu item 30 shown in illustration 340 may be executed. Thus, the apparatus 100 may cause a sub menu item of the menu item 30 to be displayed on the screen, or provide an execution screen of the menu item 30 that is being executed on the screen.

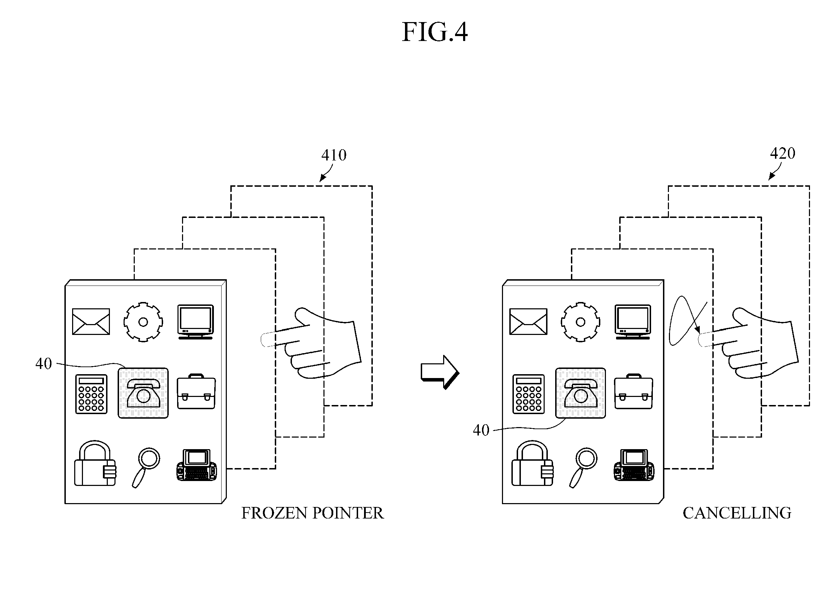

FIG. 4 illustrates a method of executing a menu by a proximity touch, according to one or more embodiments.

If a user puts his or her finger into the pointer freeze space 220, as shown in illustration 410, and the user makes an 'X' gesture, for example, with the user's finger as shown in illustration 420 with a pointer fixed to a menu item 40, the apparatus 100 may recognize the gesture as a cancel gesture. Accordingly, in an embodiment, the apparatus 100 may cause the menu item 40 to be deleted according to the cancel gesture.

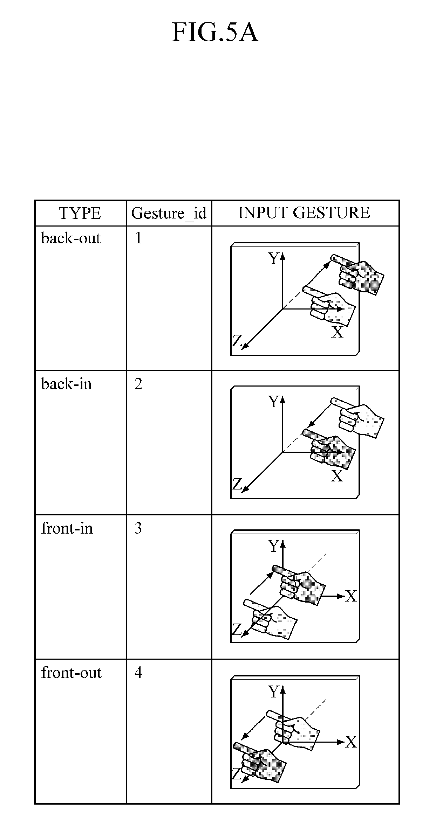

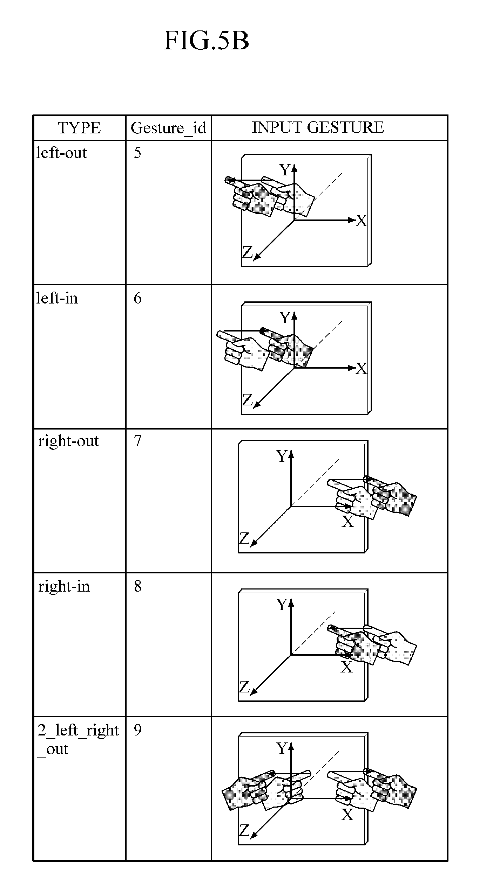

FIGS. 5A and 5B illustrate basic gesture information that may be used in identifying an access direction of a proximity touch, according to one or more embodiments.

Examples of the basic gesture information may include gesture type information, gesture identifier, and input gesture information, noting that alternative embodiments are equally available.

In this example, the gesture type information may indicate a type of gesture depending on a determined direction of gesture. The gesture identifier is for identification of a gesture type. The input gesture information indicates a gesture of a user's finger. Although FIGS. 5A and 5B illustrate a motion of a finger as the input gesture information, tracking information as the input gesture information organized in time series for detection information may be included in the storage 140. The tracking information may include a 2D or 3D image indicating a change in shape of a region where a proximity touch is detected.

Referring to FIG. 5A, a back-out gesture may indicate a motion of a finger which recedes from a rear face of the apparatus 100 detecting a proximity touch and a back-in gesture may indicate a motion of a finger which approaches the rear face. The back-out and back-in gestures may be used when the sensing unit 110 is installed on the rear face of the apparatus 100, for example.

A front-in gesture may indicate a motion of a finger which approaches a front face of the apparatus 100 detecting a proximity touch and a front-out gesture may indicate a motion of a finger which recedes from the front face.

Referring to FIG. 5B, a left-out gesture may indicate a motion of a finger which recedes from a left face of the apparatus 100 detecting a proximity touch in a leftward direction and a left-in gesture may indicate a motion of a finger which approaches the left face of the apparatus 100 in a rightward direction.

A right-out gesture may indicate a motion of a finger which recedes from the right face of the apparatus 100 in the rightward direction and a right-in gesture indicates a motion of a finger which approaches the right face of the apparatus 100 in the leftward direction. A 2_left_right_out gesture, for example, may indicate a motion of respective fingers that extend in leftward and rightward directions of the apparatus 100.

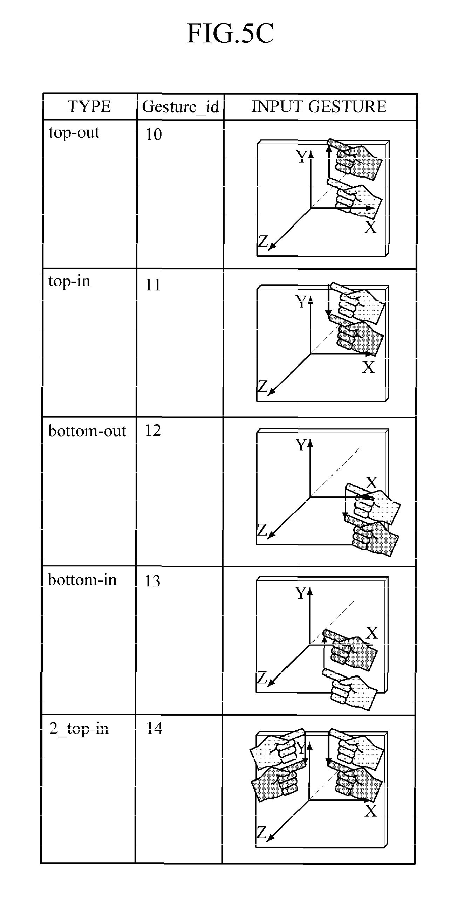

Referring to FIG. 5C, a top-out gesture may indicate a motion of a finger which moves upward of the apparatus 100 detecting a proximity touch and a top-in gesture may indicate a motion of a finger which moves downward from above the apparatus 100.

A bottom-out gesture may indicate a motion of a finger which moves downward of the apparatus 100 detecting a proximity touch and a bottom-in gesture may indicate a motion of a finger which moves upward from below the apparatus 100.

A 2_top-in gesture may indicate a motion of two fingers that move downward from above the apparatus 100.

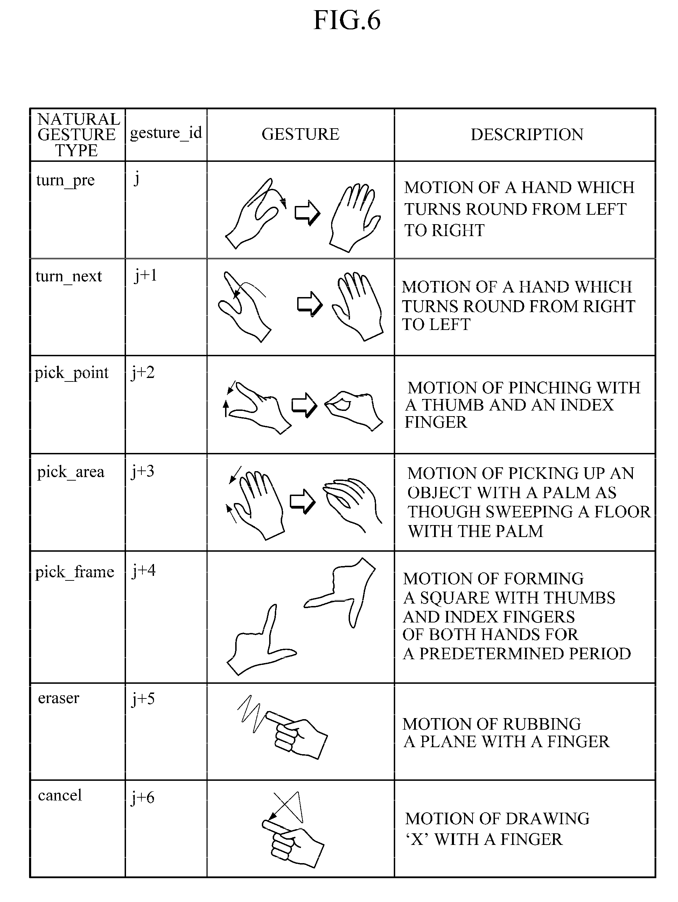

FIG. 6 illustrates natural gesture information that may be used in identifying a user's gestures used in the user's daily life, according to one or more embodiments.

The natural gesture information may be for identifying natural gestures of a user's hand as used in daily life. The natural gesture information may include a gesture type, a gesture identifier, an input gesture information, and description, for example.

The gesture type information may indicate a type of gesture depending on a determined direction of a gesture. The gesture identifier is for identification based on the gesture type. The input gesture information indicates a gesture using a user's fingers, for example. Here, although FIGS. 5A and 5B illustrate a motion of a finger as the input gesture information, tracking information as the input gesture information organized in time series for detection information may be included in the storage 140. The tracking information may include a 2D or 3D image indicating a change in shape of a region where a proximity touch is detected. The description information is for explaining what the gesture is.

A turn-pre gesture may indicate a motion of a hand which turns round from left to right. The gesture may actually correspond to a motion of turning to a previous page with a book open, for example. A turn next gesture may indicate a motion of a hand which turns round from right to left. The gesture may actually correspond to a motion of turning to a next page with a book open, for example.

A pick point gesture may indicate a motion of pinching with a thumb and an index finger. The gesture may actually correspond to a motion of picking up an object at a certain location with a thumb and an index finger, for example.

A pick area gesture may indicate a motion of picking up an object with a palm as though sweeping a floor with the palm, for example. A pick frame gesture may indicate a motion of forming a square with thumbs and index fingers of both hands for a predetermined period. An eraser gesture may indicate a motion of rubbing a plane with a finger. A cancel gesture may indicate a motion of drawing 'X' with a finger, for example.

Since a proximity touch may be performed in 3D space, real-world gestures may be used. For example, a motion of turning over a page may be applied to turning over a page of an e-book, or a motion of picking up an object may be applied to selecting of a menu item on a screen.

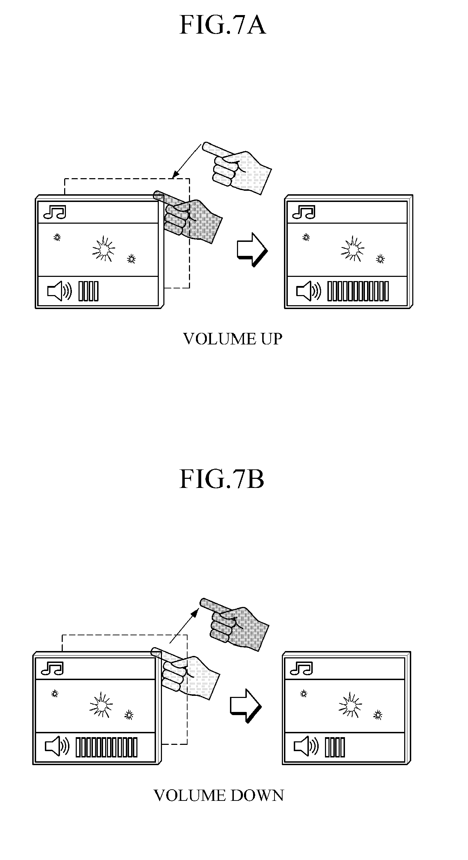

FIGS. 7A and 7B illustrate an apparatus detecting a proximity touch that identifies a gesture and performs volume adjustment, according to one or more embodiments.

As only an example, it may be assumed that when the function executing unit 126 of the apparatus 100 detecting a proximity touch executes a music playback application, a volume adjustment command may be implemented based on a determined direction of a proximity touch. The apparatus 100 detecting a proximity touch may cause the volume to be adjusted depending on a distance from the rear face of the apparatus 100. As shown in FIG. 7A, when the apparatus 100 identifies a back-in gesture, the function executing unit 126 may turn the volume up. As shown in FIG. 7B, when the apparatus 100 identifies a back-out gesture, the function executing unit 126 may turn the volume down.

The volume adjustment command based on the determined direction of the proximity touch may be defined application by application, i.e., alternate gestures may be used for volume control. Further, according to the definition of the volume adjustment command, the volume may be turned up or down, or other aspects of the audio controlled, depending on a different direction of a proximity touch for different applications.

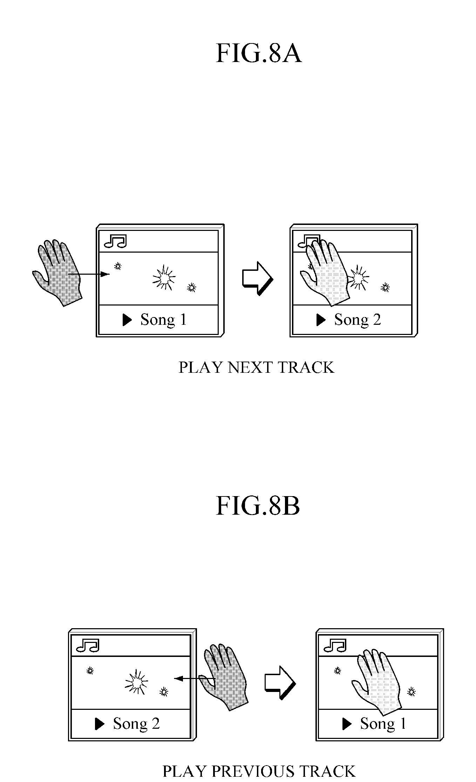

FIGS. 8A and 8B illustrate an operation of the apparatus detecting a proximity touch which changes audio tracks according to a determined direction of a proximity touch, according to one or more embodiments.

As only an example, it may be assumed that when the function executing unit 126 of the apparatus 100 detecting a proximity touch executes a music playback application, a motion parallel to the apparatus 100 may correspond to a track change command. As shown in FIG. 8A, when the apparatus 100 identifies a left-in gesture, the function executing unit 126 may skip to the next track. As shown in FIG. 8B, when the apparatus 100 identifies a right-out gesture, the function executing unit 126 may skip to the previous track.

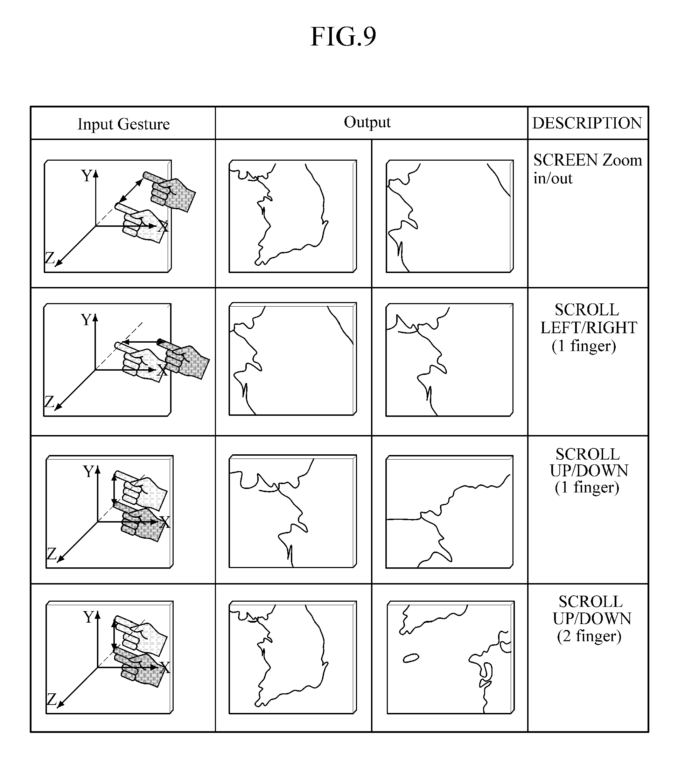

FIG. 9 illustrates a proximity touch in a map search application, according to one or more embodiments.

As only an example, it may be assumed that the function executing unit 126 of the apparatus 100 executes a map search application. As shown in FIG. 9, a back out gesture of a finger may cause a displayed map to be zoomed out on a screen, e.g., of the apparatus 100, and a back in gesture may cause the map to be zoomed in. Further, a right out gesture of a finger may cause the displayed map to be scrolled in the rightward direction on the screen of the apparatus 100 and a right in gesture may cause the map to be scrolled in the leftward direction. In addition, a top out gesture may cause the map to be scrolled up on the screen and a top in gesture may cause the map to be scrolled down.

In addition, a scrolled region may depend on an area defined by fingers. More specifically, a top in or top out gesture using two fingers may allow a larger region to be scrolled than a top in or top out gesture using one finger.

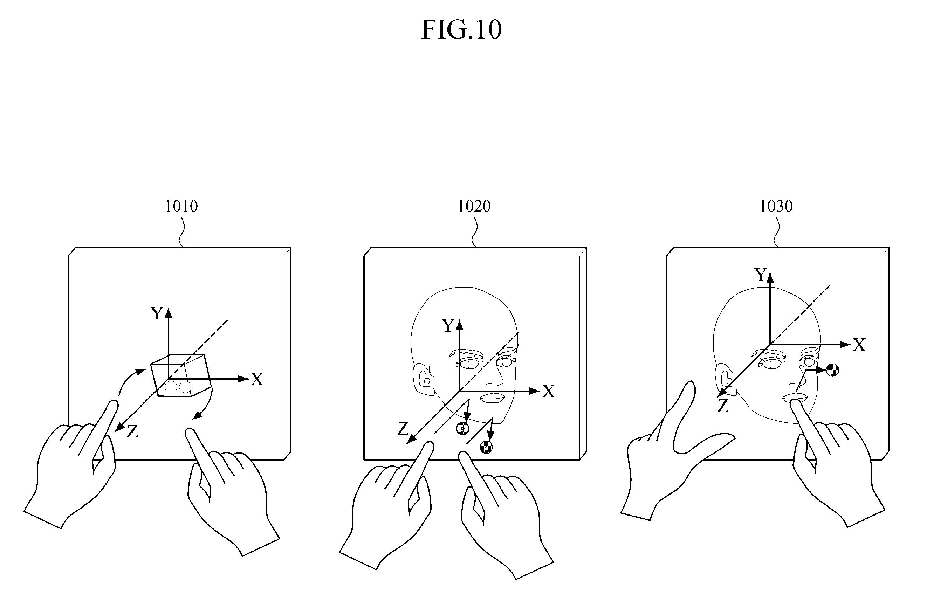

FIG. 10 illustrates proximity touch in a 3D modeling application, according to one or more embodiments.

As shown in FIG. 10, in an embodiment, a proximity touch may be based on at least two touch pointers to manipulate a shape in a 3D modeling application. As shown in illustration 1010, if a 3D rotating gesture is made with two index fingers in a proximity touch space, a 3D object may be cause to be rotated on a screen in the rotating direction of the gesture. Further, in case of object modeling of a 3D application, a gesture of taking a part out of virtual clay with two hands, as shown in illustration 1020, or a gesture of taking a part out of clay with one hand and adjusting a strength to take off the part with another hand, as shown in illustration 1030, may be applied to making of an object using virtual clay in a similar manner as a user makes an object using actual clay with fingers.

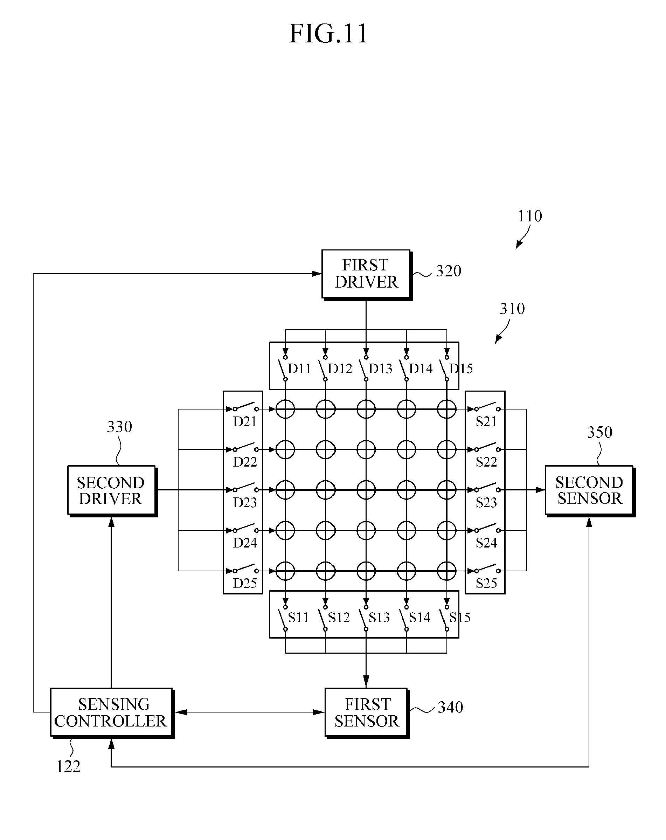

FIG. 11 is a view of a sensing unit in an apparatus detecting a proximity touch, such as the apparatus detecting a proximity touch in FIG. 1, according to one or more embodiments.

The sensing unit 110 may include a sensing controller 122, a touch panel 310, a first driver 320, a second driver 330, a first sensor 340, and a second sensor 350, for example.

As only an example, the touch panel 310 may include a plurality of sensors arranged in a matrix and may be configured to be connected to the first driver 320, the second driver 330, the first sensor 340, and the second sensor 350 through a plurality of switches. Here, the first driver 320 drives sensors arranged in columns of the touch panel 310. The second driver 320 drives sensors arranged in rows of the touch panel 310. The first sensor 340 may detect a signal generated on the touch panel according to a drive signal generated by the first driver 320. The second sensor 350 may detect a signal generated on the touch panel according to a drive signal generated by the second driver 330.

The switches D11 to D15, D21 to D25, S11 to S15 and S21 to S25 of the touch panel 310 may initially be open as shown in FIG. 11.

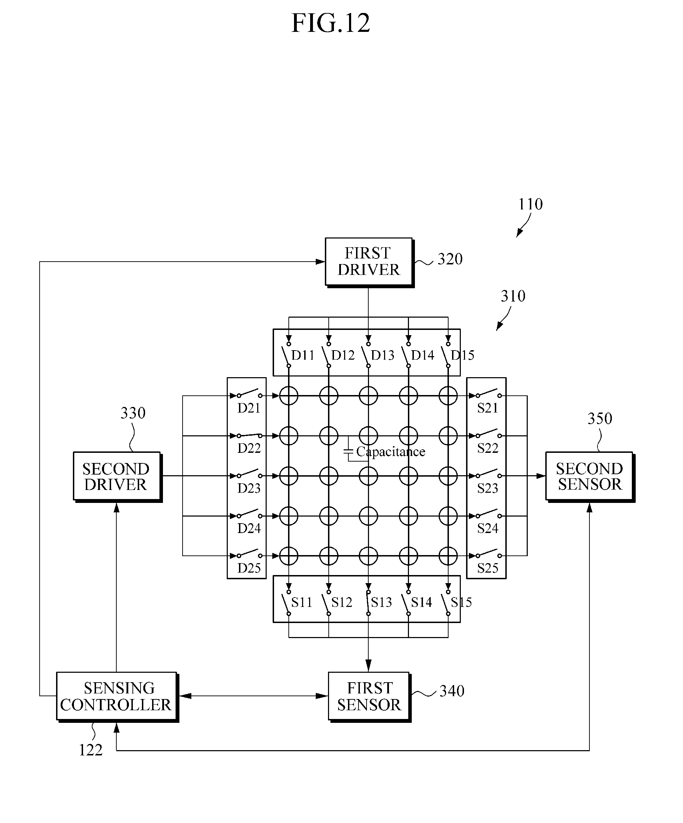

FIG. 12 illustrates operation of the sensing unit 110 in a contact touch mode, according to one or more embodiments.

In the contact touch mode, the sensing controller 122 may control the second driver 330 and the first sensor 340 to be operated in the sensing unit 110. The second driver 330 may apply a periodic pulse, such as a sinusoidal wave or square wave, to sensors arranged in rows under control of the sensing controller 122. The pulse causes capacitance between sensors in rows and in columns. The capacitance may then change upon contact, e.g., by a user's finger. FIG. 12 illustrates that a contact is detected at an intersection of sensors on the second row and on the third column while the other switches are open.

In the contact touch mode, the sensing controller 122 controls the second driver 330 and the first sensor 340 to sequentially open and close sensors in rows and in columns for contact detection at intersections of sensors in rows and in columns.

In this case, the switches S21, S22, S23, S24 and S25 and the switches D11, D12, D13, D14 and D15 may be kept open while the switches D21, D22, D23, D24 and D25 and the switches S11, S12, S13, S14 and S15 are repeatedly opened and closed. At the moment of detection, one of the switches D21, D22, D23, D24 and D25 may be selected to be closed with the others opened. Similarly, at the moment of detection, one of the switches S11, S12, S13, S14 and S15 may be selected to be closed with the others opened.

For example, the switches may be closed as follows:

(D21,S11) ⊁ (D21, S12) ⊁ (D21, S13) ⊁ (D21, S14) ⊁ (D21, S15) ⊁ (D 22, S11) ⊁...⊁ (D25, S11) ⊁ (D25, S12 ) ⊁ (D25, S13 ) ⊁ (D25, S14) ⊁ (D25, S15)

In this case, the pair of switches in each parenthesis is simultaneously closed at the moment of detection. At the moment of detection, the remaining switches except the switches in parenthesis are kept open.

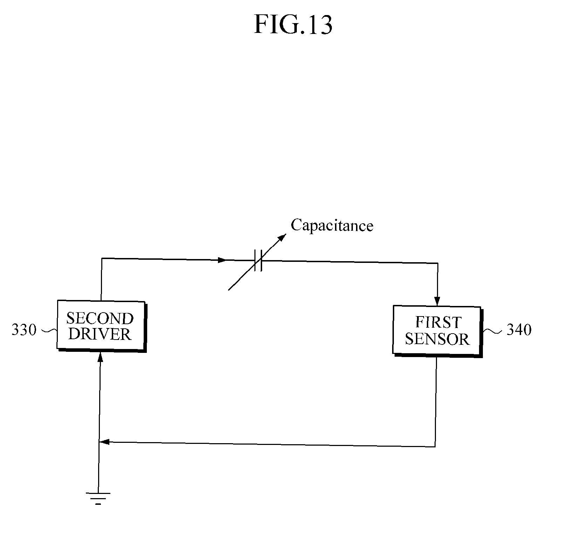

FIG. 13 illustrates a circuit diagram of a sensing unit upon detection of a contact in FIG. 12, according to one or more embodiments.

The second driver 330 may apply a square wave or rectangular wave, for example, to the touch panel 310. The capacitance existing between sensors in rows and in columns and accordingly varies due to contact. A signal generated by the second driver 330 passes through the variable capacitor and is changed in amplitude or frequency, which is detected by the first sensor 340. The detected signal indicating the capacitance is transmitted to the sensing controller 122. The sensing controller 122 may use the detected signal to determine if an object, such as a finger, is touching.

Hereinafter, a proximity touch mode will be described in greater detail.

As described above, in the case of the contact touch mode, one of the sensors in rows and one of the sensors in columns are connected to the second driver 330 and the first sensor 340. However, in this case, a detecting range is so narrow that an object is detected only when actual physical contact is made with a surface including the sensors.

However, in one or more embodiments, the sensing controller 122 may alternatively drive a plurality of sensors to cover a detecting range wide enough to detect a proximity touch. Thus, the term proximity touch is defined herein, including in the attached claims, as a touch detection within a proximity of the sensors without physical contact with the sensors or a surface including the sensors.

The sensing controller 122 may control the first driver 320 to apply a drive signal to a set of at least two columns from the first to last columns of the touch panel 310 while shifting a set of at least two columns one by one on the touch panel 310. In this case, the first sensor 340 may detect a detection signal from the set of columns where the drive signal is applied by the first driver 320.

Further, the sensing controller 122 may control the second driver 330 to apply a drive signal to a set of at least two rows from the first to last rows of the touch panel 310 while shifting a set of at least two rows one by one on the touch panel 310. In this case, the second sensor 350 may detect a detection signal from the set of rows where the drive signal is applied by the second driver 330.

The motion identifying unit 124 may generate detection information including 3D positional information about an object using the detection signal(s) detected by the first and second detection units 340 and 350. Further, the motion identifying unit 124 may keep track of the detection information for a predetermined period to generate tracking information.

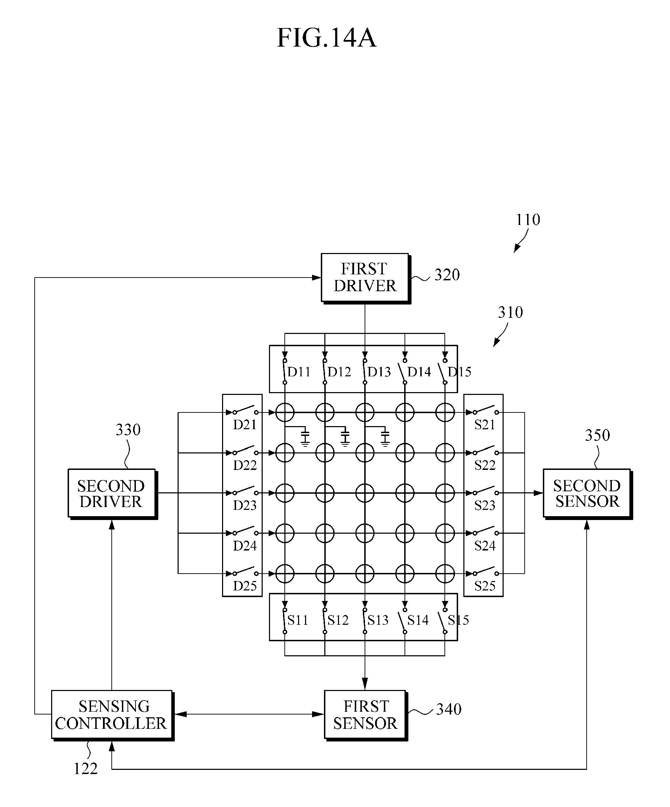

FIGS. 14A to 14C illustrate operation of a sensing unit for measuring an X-axis position in a proximity touch mode, according to one or more embodiments.

Referring to FIG. 14A, the first driver 320 and the first sensor 340 may be operated and the switches D11, D12, D13, S11, S12 and S13 corresponding to sensors in the first to third columns may be closed. In this case, the capacitance caused by sensors is virtually grounded unlike the above-mentioned case for the contact touch detection.

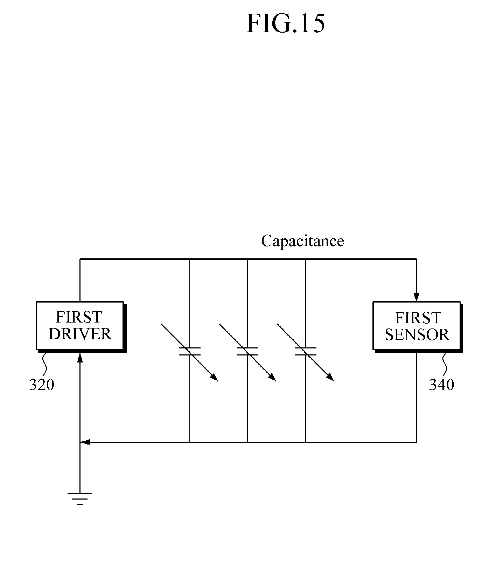

FIG. 15 illustrates a circuit diagram of a sensing unit upon detection of a proximity touch in the proximity touch mode in FIGS. 14A to 14C, according to one or more embodiments.

As shown in FIG. 15, capacitances are grounded in parallel to correspond to the number of sensors which are simultaneously driven. If a capacitance due to each sensor is denoted by C, a sum of all capacitances is equal to 3C in FIG. 15. Accordingly, comparing with a case where a single sensor is used, the detection performance may be improved by three times without modifying the sensing circuit. In this case, the sensor may detect a human body coming within several centimeters of a touch screen without physically contacting the sensor or a surface including the sensor.

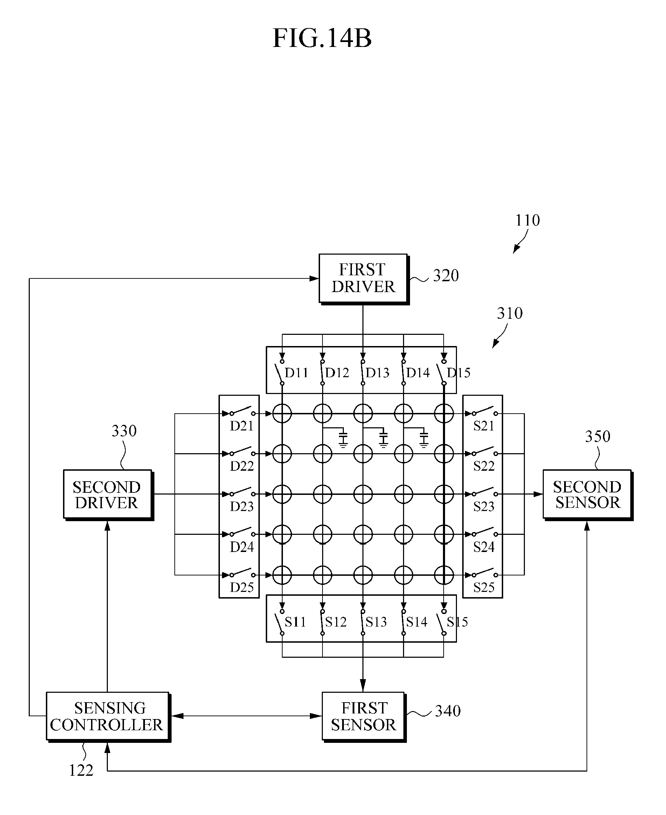

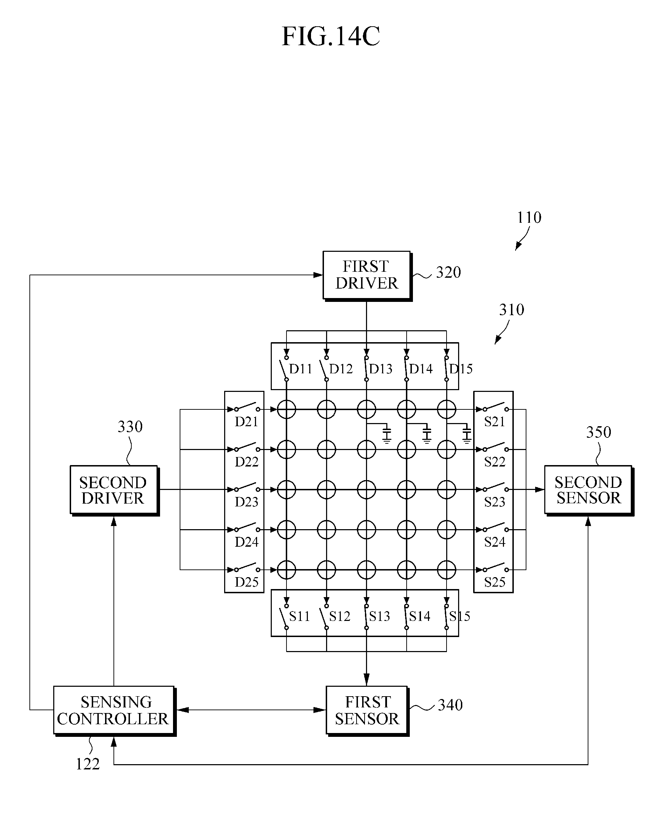

To detect only a proximity of an object, the change in capacitance has only to be measured when several sensors are simultaneously driven as shown in FIG. 14. However, to locate a 3D position of an object including a 2D position of the object as well as to detect proximity of the object, additional measurement may be needed.

The first sensor 340 measures a detection signal whenever a set of at least two columns is shifted from the first to last columns of the touch panel. The sensing controller 122 may determine an X-axis central position of a detected object using a weighted average value which is obtained using at least one detection signal as a weight value measured whenever the set of columns is shifted with respect to a position of at least one sensor column where the detection signal is detected two or more times.

The second sensor 350 may measure a detection signal whenever a set of at least two rows is shifted from the first to last rows of the touch panel. The sensing controller 122 may determine a Y-axis central position of a detected object using a weighted average value which is obtained using at least one detection signal as a weight value measured whenever the set of rows is shifted with respect to a position of at least one sensor row where the detection signal is detected two or more times.

Further, the sensing controller 122 may determine a Z-axis position of the detected object by dividing a predetermined value by a sum of the detection signals measured whenever the set of at least two rows is shifted from the first to last rows of the touch panel and the detection signals measured whenever the set of at least two columns is shifted from the first to last columns of the touch panel.

Referring to FIGS. 14A to 14C, the leftmost three columns of sensors may be driven upon the first detection as shown in FIG. 14A. Three central columns of sensors may be driven upon the second detection as shown in FIG. 14B. The rightmost three columns of sensors may be driven upon the third detection as shown in FIG. 14C.

For example, the measured values of the detection signals obtained from the processes of FIGS. 14A to 14C are denoted by x1, x2, and x3 and the column positions of the sensors are denoted by px1, px2, px3, px4, and px5.

A detection position (1x1) for the measured value x1 may be determined from the positions px1, px2 and px3 of sensors driven to generate the measured value x1. For example, the detection position (1x1) of the value x1 may be determined as an average position of the positions px1, px2 and px3 of the sensors. The detection position (1x2) of the value x2 may be determined as an average position of the positions px2, px3 and px4 of the sensors. The detection position (1x3) of the value x3 may be determined as an average position of the positions px3, px4 and px5 of the sensors. Measured value sets (1x1, x1), (1x2, x2) and (1x3, x3) corresponding to the detection positions may be sent to the motion identifying unit 124 through the sensing controller 122 and used in generating the tracking information.

On the other hand, positions of a group of sensors simultaneously driven during the above-mentioned three-time driving processes may be set to px2, px3 and px4. After the column scanning is completed, the central position (x) of a proximity touch for the detected object may be obtained from the below weighted average of Equation 1, for example. The central X-axis position (x) may be used in generating the tracking information of a proximity touch or in identifying a gesture.

$$x = (x1 * px2 + x2 * px3 + x3 * px4)/(x1 + x2 + x3) \ldots \ldots \ldots (1)$$

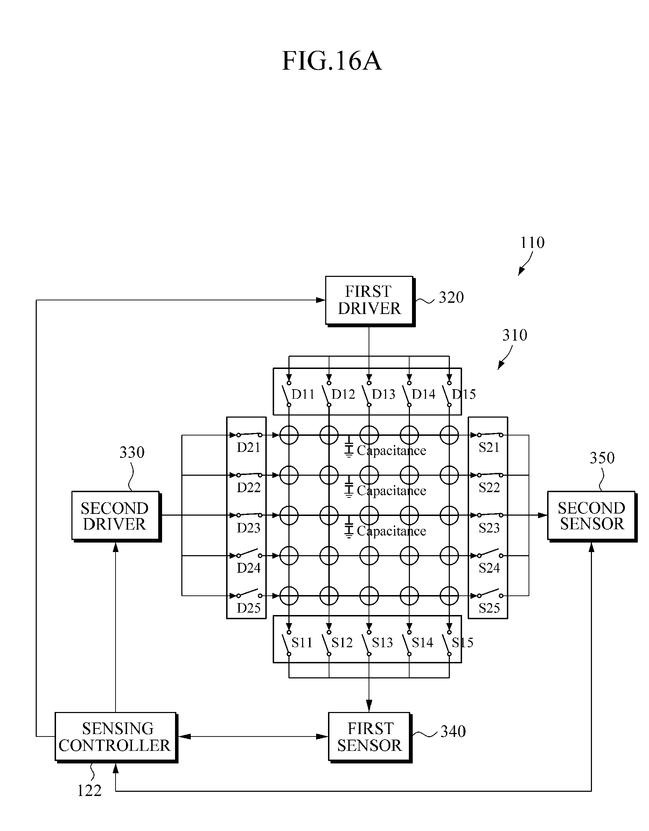

FIGS. 16A to 16C illustrate operation of a sensing unit for measuring a Y-axis position in a proximity touch mode, according to one or more embodiments.

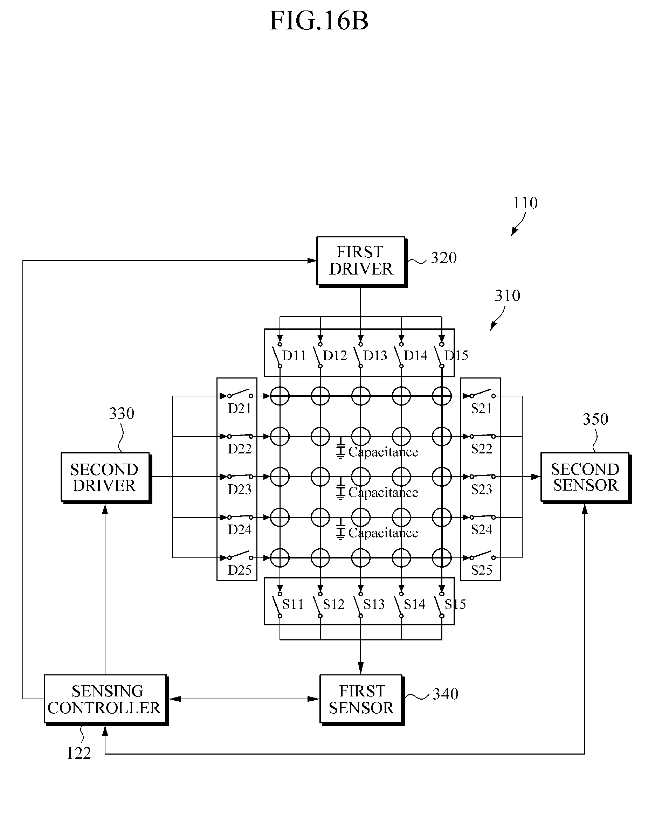

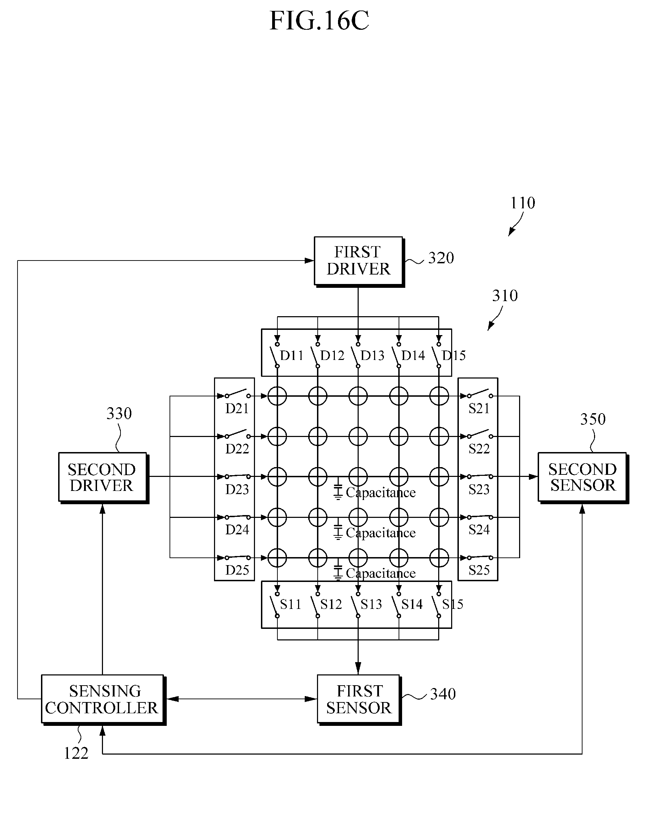

The uppermost three rows of sensors may be driven upon the first detection as shown in FIG. 16A. Three central rows of sensors may be driven upon the second detection as shown in FIG. 16B. The lowermost three rows of sensors may be driven upon the third detection as shown in FIG. 16C. Similarly, measured values y1, y2 and y3 are obtained by scanning the rows for a position of a detected object as shown in FIGS. 16A to 16C. In this case, the row positions of the sensors are denoted by py1, py2, py3, py4 and py5.

A detection position (1y1) for the measured value y1 may be determined from the positions py1, py2 and py3 of sensors driven to generate the measured value y1. For example, the detection position (1y1) of the value y1 may be determined as an average position of the positions py1, py2 and py3 of the sensors. The detection position (1y2) of the value y2 may be determined as an average position of the positions py2, py3 and py4 of the sensors. The detection position (1y3) of the value y3 may be determined as an average position of positions py3, py4 and py5 of the sensors. Measured value sets (1y1, y1), (1y2, y2) and (1y3, y3) corresponding to the detection positions may be sent to the motion identifying unit 124 through the sensing controller 122 and used in generating the tracking information.

On the other hand, positions of a group of sensors simultaneously driven during the above-mentioned three-time driving processes may be set to py2, py3 and py4. After the row scanning is completed, the central position (y) of a proximity touch for the detected object may be obtained from the below weighted average of Equation 2, for example. The central Y-axis position (y) may be used in generating the tracking information of a proximity touch or in identifying a gesture.

$$y = (y1 * py2 + y2 * py3 + y3 * py4)/(y1 + y2 + y3) \ldots \ldots \ldots (2)$$

Accordingly, a plurality of 2D detection positions may be determined from the column detection position (1x1, 1x2, 1x3) and the row detection position (1y1, 1y2, 1y3). Further, a proximity touch detection area may be calculated based on the 2D detection positions. The proximity touch detection area may be used in generating the tracking information. Further, capacitance distribution for the proximity touch detection area may be calculated using the measured values for the 2D detection positions. The capacitance distribution may also be used in generating the tracking information.

On the other hand, a Z-axis proximity distance may be set as follows. Since capacitance is inversely proportional to distance, the below Equation 3, for example, may also be effective.

$$z = 1/(x1 + x2 + x3 + y1 + y2 + y3) \ldots \ldots \ldots (3)$$

Here, a distance of 1 is only illustrative. In an embodiment, the Z-axis proximity distance may be calculated by dividing a predetermined value by a sum of measured values.

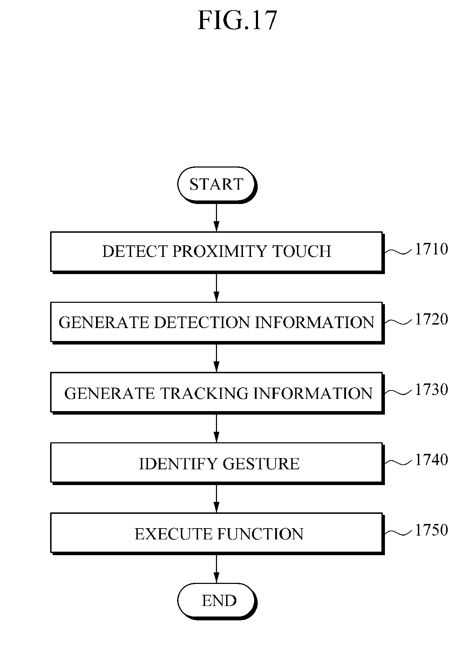

FIG. 17 is a flow chart of a method of detecting a proximity touch, according to one or more embodiments.

In operation 1710, a proximity touch of an object may be detected and a detection signal generated. In operation 1720, detection information including 3D positional information about the object may be generated using the detection signal. In operation 1730, tracking of the detection information, e.g., over time, may be monitored to generate tracking information. In operation 1740, a gesture corresponding to the tracking information may be identified. In operation 1750, a particular operation, or non-operation, corresponding to the gesture may be controlled to be implemented.

In one or more embodiments, apparatus, system, and unit descriptions herein include one or more hardware processing elements. For example, each described unit may include one or more processing elements, desirable memory, and any desired hardware input/output transmission devices. Further, the term apparatus should be considered synonymous with elements of a physical system, not limited to a single enclosure or all described elements embodied in single respective enclosures in all embodiments, but rather, depending on embodiment, is open to being embodied together or separately in differing enclosures and/or locations through differing hardware elements.

In addition to the above described embodiments, embodiments can also be implemented through computer readable code/instructions in/on a non-transitory medium, e.g., a computer readable medium, to control at least one processing device, such as a processor or computer, to implement any above described embodiment. The medium can correspond to any defined, measurable, and tangible structure permitting the storing and/or transmission of the computer readable code.

The media may also include, e.g., in combination with the computer readable code, data files, data structures, and the like. One or more embodiments of computer-readable media include magnetic media such as hard disks, floppy disks, and magnetic tape; optical media such as CD ROM disks and DVDs; magneto-optical media such as optical disks; and hardware devices that are specially configured to store and perform program instructions, such as read-only memory (ROM), random access memory (RAM), flash memory, and the like. Computer readable code may include both machine code, such as produced by a compiler, and files containing higher level code that may be executed by the computer using an interpreter, for example. The media may also be a distributed network, so that the computer readable code is stored and executed in a distributed fashion. Still further, as only an example, the processing element could include a processor or computer, and processing elements may be distributed and/or included in a single device.

While aspects of the present invention has been particularly shown and described with reference to differing embodiments thereof, it should be understood that these embodiments should be considered in a descriptive sense only and not for purposes of limitation. Descriptions of features or aspects within each embodiment should typically be considered as available for other similar features or aspects in the remaining embodiments. Suitable results may equally be achieved if the described techniques are performed in a different order and/or if components in a described system, architecture, device, or circuit are combined in a different manner and/or replaced or supplemented by other components or their equivalents.

Thus, although a few embodiments have been shown and described, with additional embodiments being equally available, it would be appreciated by those skilled in the art that changes may be made in these embodiments without departing from the principles and spirit of the invention, the scope of which is defined in the claims and their equivalents.

**Claims**

1. An apparatus detecting a proximity touch, the apparatus comprising:

    a sensing unit to detect a proximity touch of an object and generate a proximity detection signal based on the detected proximity touch;
    a control unit to generate detection information including three-dimensional (3D) positional information about the object using the proximity detection signal, generate tracking information by tracking the detection information, retrieve a gesture corresponding to the tracking information from a storage unit to identify the gesture, and to control execution of an operation corresponding to the gesture; and
    the storage unit to store the gesture information corresponding to the tracking information.

2. The apparatus of claim 1,
    wherein, spaces along a Z-axis, perpendicular to the sensing unit and being one of the 3D positional information, are arranged along the Z-axis into a pointer hovering space, a pointer freeze space, and an execution space in order of respective distances from the sensing unit, and
    wherein, upon a position of the proximity touch being determined to be within the pointer hovering space, the control unit causes a displayed pointer corresponding to the position of the proximity touch to move according to a motion of the proximity touch,
    upon a position of the proximity touch being determined to be within the pointer freeze space, the control unit causes the pointer to be set to a fixed position, and
    upon a position of the proximity touch being determined to be within the execution space, the control unit causes an operation corresponding to the fixed position to be executed.

3. The apparatus of claim 2, further comprising a display unit to display the pointer, wherein the control unit causes the display unit to provide visual feedback to indicate that the object is located within the pointer freeze space when the object is determined to be moved from the pointer hovering space to the pointer freeze space.

4. The apparatus of claim 1, 2 or 3, wherein the tracking information comprises at least one of image information indicating a change in shape of a region where the proximity touch is detected, capacitance information of the sensing unit indicating a change in capacitance of at least one detection position, position information indicating a change in central detection position with respect to a plurality of detection positions, direction information indicating a change in direction of the proximity touch, and area information indicating a change in area of the proximity touch.

5.  The apparatus of any of claims 1-4, wherein the control unit controls the sensing unit to perform, in a time division manner, a proximity touch mode detecting the object with object not being in contact with the sensing unit and a contact touch mode for detecting the object when the object is in contact with the sensing unit.

6.  The apparatus of claim 5, wherein, while the proximity touch mode and the contact touch mode are performed in the time division manner,
    when the sensing unit detects a proximity touch in the proximity touch mode, the control unit controls the sensing unit to maintain in the proximity touch mode until a detection signal corresponding to the proximity touch is no longer input, and
    when the sensing unit detects a contact touch in the contact touch mode, the control unit controls the sensing unit to maintain in the contact touch mode until a detection signal corresponding to the contact touch is no longer input.

7.  The apparatus of claim 5 or 6, wherein the sensing unit comprises:

    a touch panel including a plurality of sensors arranged in a matrix;
    a first driver driving sensors arranged in columns on the touch panel;
    a second driver driving sensors arranged in rows on the touch panel;
    a first sensor detecting a first detection signal generated from the touch panel according to a drive signal generated by the first driver; and
    a second sensor detecting a second detection signal generated from the touch panel according to a drive signal generated by the second driver.

8.  The apparatus of claim 7, wherein the control unit controls the first driver to apply a drive signal to a set of at least two columns, from first to last columns, on the touch panel while shifting the set of at least two columns column by column,
    the control unit controls the second driver to apply a drive signal to a set of at least two rows, from first to last rows, on the touch panel while shifting the set of at least two rows row by row, and
    a three-dimensional (3D) position of the object is calculated using the first and second detection signals.

9.  The apparatus of claim 8,
    wherein the control unit determines a weighted average value as an X-axis central position of the detected proximity touch, the weighted average value being obtained using, as weight values, detection signals measured when the set of at least two columns is shifted from the first to last columns of the touch panel with respect to a position of at least one sensor column where the first detection signal is detected at least two times,
    wherein the control unit determines a weighted average value as a Y-axis central position of the detected proximity touch, the weighted average value being obtained using, as weight values, detection signals measured whenever the set of at least two rows is shifted from the first to last rows of the touch panel with respect to a position of at least one sensor row where the second detection signal is detected at least two times, and
    wherein the control unit determines a Z-axis position by dividing a predetermined value by a sum of the detection signals measured whenever the set of at least two rows is shifted from the first to last rows of the touch panel and the detection signals measured whenever the set of at least two columns is shifted from the first to last columns of the touch panel, and/or
    wherein the control unit controls an operation corresponding to the gesture to be implemented according to an application type of an application currently active and/or
    wherein the sensing unit is located on at least one of a front face of the apparatus where a display unit outputting display information is located, a rear face of the apparatus opposing the display unit, and a side face of apparatus corresponding to a side of the display unit.

10. A method of detecting a proximity touch, the method comprising:

    detecting a proximity touch of an object and generating a proximity detection signal based on the detected proximity touch;
    generating detection information including three-dimensional (3D) positional information about the object using the proximity detection signal;
generating tracking information by tracking the detection information;
identifying a gesture corresponding to the tracking information by comparing the tracking information to stored gesture information; and
executing an operation corresponding to the gesture.

**11.** The method of claim 10,
wherein an apparatus according to any of claims 1-9 is used.

**12.** A sensing unit to detect a proximity touch, the sensing unit comprising:

a plurality of selectively drivable sensors to be selectively driven to detect a proximity touch of an object and a contact touch of the object; and
a controller to control one or more drivers to selectively drive the sensors with proximity drive signals configured for a proximity touch mode to detect the proximity touch and contact drive signals configured for a contact touch mode for detecting the contact touch, the controller controlling the proximity drive signals to drive different configurations of the sensors to detect the proximity touch in the proximity touch mode from configurations of the sensors driven by the contact drive signals to detect the contact touch in the contact touch mode.

**13.** The sensing unit of claim 1, for use in apparatus according to any of claims 1-9, and/or
a method according to claims 10 or 11.

**14.** An apparatus to detect a proximity touch, the apparatus comprising:

the sensing unit of claim 12, further comprising the controller of the sensing unit generating a proximity detection signal based on the detected proximity touch; and
a control unit to generate detection information including three-dimensional (3D) positional information about the object using the proximity detection signal, generate tracking information by tracking the detection information, retrieve a gesture corresponding to the tracking information from a storage unit to identify the gesture, and to control execution of an operation corresponding to the gesture, and/or
wherein, spaces along a Z-axis, perpendicular to the sensing unit and being one of the 3D positional information, are arranged along the Z-axis into a pointer hovering space, a pointer freeze space, and an execution space in order of respective distances from the sensing unit, and
wherein, upon a position of the proximity touch being determined to be within the pointer hovering space, the control unit causes a displayed pointer corresponding to the position of the proximity touch to move according to a motion of the proximity touch,
upon a position of the proximity touch being determined to be within the pointer freeze space, the control unit causes the pointer to be set to a fixed position, and
upon a position of the proximity touch being determined to be within the execution space, the control unit causes an operation corresponding to the fixed position to be executed, and/or
wherein the controller of the sensing unit controls the proximity touch mode with the proximity drive signals and the contact touch mode with the contact drive signals to be driven in a time division manner, and
wherein, while the proximity touch mode and the contact touch mode are performed in the time division manner, when the sensing unit detects the proximity touch in the proximity touch mode, the controller controls the sensing unit to maintain in the proximity touch mode until the proximity touch is no longer detected, and
when the sensing unit detects the contact touch in the contact touch mode, the controller controls the sensing unit to maintain in the contact touch mode until the contact touch is no longer detected.

**15.** A sensing method for detecting a proximity touch with a plurality of selectively drivable sensors to be selectively driven to detect the proximity touch of an object and a contact touch of the object, the method comprising: selectively driving the sensors with proximity drive signals configured for a proximity touch mode to detect the proximity touch and contact drive signals configured for a contact touch mode for detecting the contact touch, the selective driving of the sensors including controlling the proximity drive signals to drive different configurations of the sensors to detect the proximity touch in the proximity touch mode than configurations of the sensors driven by the contact drive signals to detect the contact touch in the contact touch mode, and/or
generating a proximity detection signal based on the detected proximity touch;
generating detection information including three-dimensional (3D) positional information about the object using the proximity detection signal;

generating tracking information by tracking the detection information;
identifying a gesture corresponding to the tracking information by comparing the tracking information to stored gesture information; and
executing an operation corresponding to the gesture.

# FIG.1

100

```
CONTROL UNIT

120 ──┐
        ┌──────────────────────────────┐
        │   SENSING CONTROLLER          │──122
        └──────────────────────────────┘

SENSING UNIT ←→   MOTION IDENTIFYING UNIT   ──124   ←→ DISPLAY UNIT

110              FUNCTION EXECUTING UNIT   ──126            140
```

STORAGE UNIT

130

# FIG.2

POINTER HOVERING SPACE (210)

POINTER FREEZE SPACE (220)

EXECUTION SPACE (230)

# FIG.3

310     POINTING

320

330     FROZEN POINTER

340     EXECUTED MENU

EP 2 323 023 A2

# FIG.4

FROZEN POINTER

CANCELLING

# FIG.5A

| TYPE | Gesture_id | INPUT GESTURE |
|---|---|---|
| back-out | 1 | |
| back-in | 2 | |
| front-in | 3 | |
| front-out | 4 | |

# FIG.5B

| TYPE | Gesture_id | INPUT GESTURE |
|------|-----------|---------------|
| left-out | 5 | |
| left-in | 6 | |
| right-out | 7 | |
| right-in | 8 | |
| 2_left_right _out | 9 | |

# FIG.5C

| TYPE | Gesture_id | INPUT GESTURE |
|---|---|---|
| top-out | 10 | |
| top-in | 11 | |
| bottom-out | 12 | |
| bottom-in | 13 | |
| 2_top-in | 14 | |

# FIG.6

| NATURAL GESTURE TYPE | gesture_id | GESTURE | DESCRIPTION |
|---|---|---|---|
| turn_pre | j | | MOTION OF A HAND WHICH TURNS ROUND FROM LEFT TO RIGHT |
| turn_next | j+1 | | MOTION OF A HAND WHICH TURNS ROUND FROM RIGHT TO LEFT |
| pick_point | j+2 | | MOTION OF PINCHING WITH A THUMB AND AN INDEX FINGER |
| pick_area | j+3 | | MOTION OF PICKING UP AN OBJECT WITH A PALM AS THOUGH SWEEPING A FLOOR WITH THE PALM |
| pick_frame | j+4 | | MOTION OF FORMING A SQUARE WITH THUMBS AND INDEX FINGERS OF BOTH HANDS FOR A PREDETERMINED PERIOD |
| eraser | j+5 | | MOTION OF RUBBING A PLANE WITH A FINGER |
| cancel | j+6 | | MOTION OF DRAWING 'X' WITH A FINGER |

# FIG.7A

VOLUME UP

# FIG.7B

VOLUME DOWN

FIG.8A

PLAY NEXT TRACK

FIG.8B

PLAY PREVIOUS TRACK

# FIG.9

| Input Gesture | Output | | DESCRIPTION |
|---|---|---|---|
| | | | SCREEN Zoom in/out |
| | | | SCROLL LEFT/RIGHT (1 finger) |
| | | | SCROLL UP/DOWN (1 finger) |
| | | | SCROLL UP/DOWN (2 finger) |

FIG.10

EP 2 323 023 A2

# FIG.11

# FIG.12

# FIG.13

# FIG.14A

# FIG.14B

# FIG.14C

# FIG.15

Capacitance

FIRST DRIVER

320

FIRST SENSOR

340

# FIG.16A

# FIG.16B

# FIG.16C

# FIG.17

```
                    ┌─────────┐
                    │  START  │
                    └────┬────┘
                         │
                         ▼
        ┌─────────────────────────────────┐
        │     DETECT PROXIMITY TOUCH      │──╮ 1710
        └────────────────┬────────────────┘
                         │
                         ▼
        ┌─────────────────────────────────┐
        │  GENERATE DETECTION INFORMATION │──╮ 1720
        └────────────────┬────────────────┘
                         │
                         ▼
        ┌─────────────────────────────────┐
        │  GENERATE TRACKING INFORMATION  │──╮ 1730
        └────────────────┬────────────────┘
                         │
                         ▼
        ┌─────────────────────────────────┐
        │        IDENTIFY GESTURE         │──╮ 1740
        └────────────────┬────────────────┘
                         │
                         ▼
        ┌─────────────────────────────────┐
        │        EXECUTE FUNCTION         │──╮ 1750
        └────────────────┬────────────────┘
                         │
                         ▼
                    ┌─────────┐
                    │   END   │
                    └─────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020090109236